# EUROPEAN PATENT SPECIFICATION

(11) **EP 0 455 330 B1**
(45) Date of publication and mention of the grant of the patent: **11.08.1993**
(21) Application number: 91301996.4
(22) Date of filing: 11.03.1991
(51) Int. Cl.: F24D 19/08

(54) **Deaeration system for a boiler**
Entlüftungsanlage für einen Heizkessel
Installation de désaération pour une chaudière de chauffage

(30) Priority: 02.04.1990 JP 88043/90
(43) Date of publication of application: 06.11.1991
(73) Proprietor: JAPAN GORE-TEX, INC., Setagaya-ku Tokyo 156 (JP)
(72) Inventor: Chikamori, Yoshihiro, Okayama-Shi, Okayama-Ken 709-08 (JP); Yokota, Takushi, Okayama-Shi, Okayama-Ken 703 (JP); Shibata, Yoshihiko, Okayama-Shi, Okayama-Ken 704 (JP); Shimizu, Youichi, Okayama-Shi, Okayama-Ken 703 (JP)
(74) Representative: MacDougall, Donald Carmichael

(56) References cited:
- DE-A- 2 810 583
- HEATING, PIPING AND AIR CONDITIONING, vol. 54, no. 11, November 1982, pages 65-68, Stamford, Connecticut, US; J.F. WILLIAMS: "Why deaerate?"

## Description

The present invention concerns a system for deaerating water supplied to a boiler according to the preamble of claim 1.

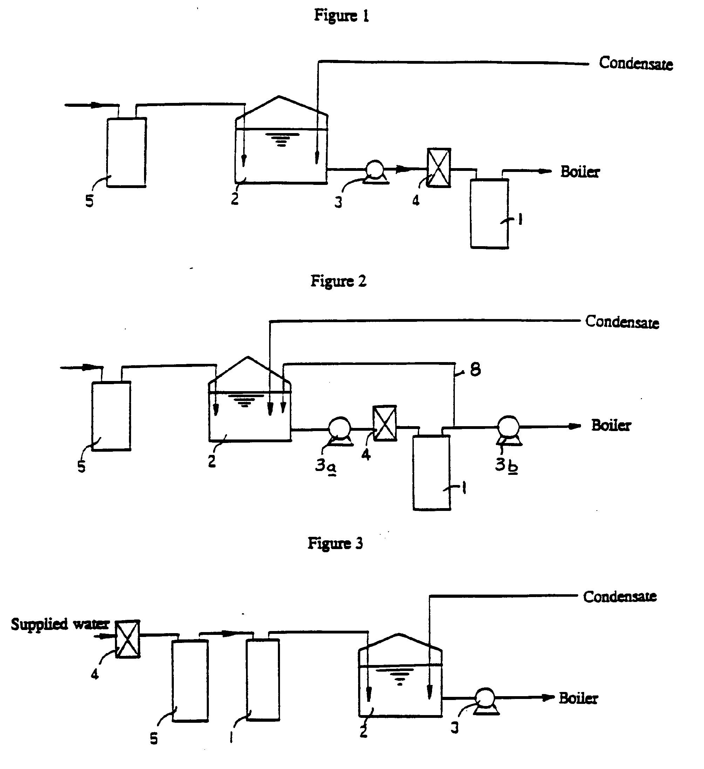

In the past, the following boiler systems have been proposed namely: (1) a system where steam is recovered (a system fitted with condensate lines), and (2) a system where steam is not recovered (a system which is not fitted with condensate lines). In the case of the former (see Figure 3), a tank is placed in advance of the boiler, with a deaerator being positioned in advance of said tank. Furthermore, various deaeration methods have also been proposed including a chemical injection method, a vacuum method (it can also be performed at elevated temperatures and under increased pressures), and a film-type method.

However, in conventional boiler systems, and especially in boiler systems having condensate lines there are certain disadvantages. For example, it is difficult to supply a boiler with deaerated water having a specified concentration of dissolved oxygen which does not change during the process. The chemical injection method does not ensure a complete deaeration (removal of dissolved oxygen), thereby causing the boiler to corrode, while the vacuum method requires large-size equipment or operates under conditions of elevated temperatures and high pressure even for compact boilers (and is often used with large-size boilers). Film-type deaerators are comparatively small when used in boiler systems which do not have condensate lines and can easily supply deaerated water to the boiler, but when a boiler system is fitted with a condensate line for steam recovery, it becomes impossible to render airtight the structure of the condensate tank, thereby permitting oxygen to penetrate through the openings to be dissolved again and causing the boiler to corrode.

In the journal Heating/Piping/Air Conditioning, Vol 54 (1982), No. 11, pages 65 to 68, there is described in an article entitled "Why deaerate?" by J.F. Williams, an arrangement in which it is suggested that a deaerator may be interposed between an inlet for pumped returns and an outlet to a boiler. The relationship of efficiency in the deaerating process with water temperature is discussed in the article.

An object of the present invention is to provide an improved deaeration system.

According to the present invention, there is provided a deaeration system for a boiler, said system having a condensate line, a deaerator and a condensate tank, characterised in that a first conveying pump, the deaerator and a second conveying pump, are located sequentially between the condensate tank and the boiler, a bypass for returning water into the condensate tank being located between the deaerator and the second conveying pump, and said deaerator being a film-type deaerator.

By locating the deaerator further from the condensate tank and closer to the boiler, it becomes possible to prevent re-dissolution of gaseous oxygen inside the condensate tank and thus to maintain a specified deaeration level, achieved at the deaerator, until water reaches the boiler inlet port.

Compared to the water temperature (5 to 25°C) achieved when the deaerator is placed before or in advance of the condensate tank, the water temperature (30 to 95°C) is higher when the deaerator is further from the condensate tank and closer to the boiler, leading to an increased deaeration efficiency (this is because the higher the water temperature, the lower the saturation concentration of dissolved oxygen and the greater the diffusion efficiency of dissolved oxygen, resulting in an increased deaeration efficiency) and thereby making it possible to achieve a specified deaeration level using a more compact deaerator than in cases where deaerators are installed in advance of or upstream of condensate tanks.

Moreover, when the film-type method is used in a deaeration system which is fitted with a bypass for returning water into the condensate tank, it becomes possible to use film-type deaerator modules with low pressure-tightness by adopting low-pressure conveying pumps and adjusting the pressure.

An embodiment of the present invention will now be described, by way of example, with reference to the accompanying drawings in which:
Fig. 1 is a diagram showing a deaeration system discussed below;
Fig. 2 is a diagram showing an embodiment of a deaeration system of the present invention;
Fig. 3 is a diagram showing a conventional deaeration system.

Fig. 1 refers to a deaeration system and shows a boiler system incorporating a deaerator 1 to which water is conveyed from a condensate tank 2 by means of a conveying pump 3 and a filter 4 is interposed in the flow line between the conveying pump 3 and the deaerator 1. A water softener 5 is located in the flow line in advance of the condensate tank 2. After leaving the deaerator 1, the water is conveyed to the boiler. Condensate water is recovered from the boiler and is returned to the condensate tank 2 via a separate passage or flow line in a manner identical to that described hereafter in the conventional embodiment of Fig. 3.

Fig. 2 refers to an embodiment of the system in accordance with the present invention in which water is conveyed to a boiler via a deaerator 1 from a condensate tank 2. The water is pumped to the boiler from the condensate tank 2 by means of first and second conveying pumps 3a and 3b. The first pump 3a is located in the flow line after the condensate tank 2 and in advance of the deaerator 1 with a filter 4 being interposed between the pump 3a and the deaerator 1. The second pump 3b is located in the flow line after the deaerator 1 and in advance of the boiler. A water softener 5 is located in the flow line in advance of the condensate tank 2. A bypass 8 is additionally provided between the deaerator 1 and the second conveying pump 3b. In this way, a conveying pressure difference is set up between the first conveying pump 3a and the second conveying pump 3b and the amount of water being supplied is controlled by using the bypass 8. By this means the application of excess loads to film-type modules in the system is avoided and a long term stability of the system can be achieved even when a film-type deaerator containing film-type modules is used as the deaerator 1. Because elevated temperatures (30 to 95°C) and high pressures of no less than 7kg/cm² are required to supply water from the condensate tank 2 to the boiler it is normally difficult to construct a film-type module capable of withstanding such conditions for a long period of time. In other words, in order not to subject a film-type module in the deaerator 1 to an excessive load, the low pressure conveying pump 3a is used for pumping water from the condensate tank 2 into the deaerator 1. Then, the high-pressure conveying pump 3b is used to pump water from the deaerator 1 into the boiler by creating a hydraulic pressure required to supply water into the boiler. The amount of water being supplied is controlled in an appropriate manner by using the above-mentioned bypass 8 connected to the condensate tank 2.

Fig. 3 illustrates a previously proposed arrangement of boiler deaeration system which is not in accordance with the present invention. The previously proposed system of Fig. 3 incorporates a boiler feed system in which water is supplied to a boiler and a deaerator 1 is located in the flow line in advance of a condensate tank 2. A conveying pump 3 serves to convey the water to the boiler and a filter 4 and water softener 5 is located in the flow line in advance of or downstream of the deaerator 1. Condensate water is recovered from the boiler and is returned to the condensate tank 2 via a separate conduit as shown in Fig. 3.

Experiments were conducted in relation to a boiler deaeration system of the present invention by using a boiler that required the supply of water in an amount of 1 Ton/hr.

### COMPARATIVE EXAMPLE

A film-type deaerator (a film-type deaerator module having a length of 320 mm and a diameter of 1000 mm and manufactured by JAPAN GORE-TEX, INC.) was adopted in the conventional boiler system shown in Fig. 3, and a dissolved oxygen concentration of no more than 0.5 ppm was specified in order not to cause the corrosion of the boiler. Although this object was attained for the inlet port of the condensate tank 2, it was impossible to maintain the concentration of dissolved oxygen at the boiler inlet port at a value of no more than 0.5 ppm. This was due to the fact that the return of condensate resulted in the redissolution of oxygen.

### EXAMPLE 1

When a film-type deaerator identical to that used in Comparative Example was used in the boiler system shown in Fig. 1, a dissolved oxygen concentration of no more than 0.5 ppm was obtained even at the boiler inlet port. This was due to the fact that the deaeration efficiency was improved because, firstly, the deaeration by the deaerator 1 was conducted immediately before water was fed into the boiler, and secondly deaeration was performed by the deaerator 1 on water which had a temperature of 60 to 80°C when it was leaving the condensate tank 2 in Fig. 1, in contrast to performing deaeration on water which has a temperature of 10 to 20°C before entering the condensate tank 2 in the Comparative Example described in relation to Fig. 3.

### EXAMPLE 2

In the case of the boiler system according to the invention shown in Fig, 2 it was possible to use a film-type deaerator that had even lower pressure specifications than in the Comparative Example and Example 1 above, thereby ensuring that a dissolved oxygen concentration of no more than 0.5 ppm was achieved. Moreover, since tank water could be circulated through the bypass 8, it was also possible to supply water having a specified concentration of dissolved oxygen immediately after the boiler operation.

## Claims

1. A deaerator system for a boiler, said system having a condensate line, a deaerator (1) and a condensate tank (2), characterised in that a first conveying pump (3a), the deaerator (1) and a second conveying pump (3b), are located sequentially between the condensate tank (2) and the boiler, a bypass (8) for returning water into the condensate tank (2) being located between the deaerator (1) and the second conveying pump (3b), and said deaerator (1) being a film-type deaerator.

## Patentansprüche

1. Entlüftungsanlage für einen Heizkessel, wobei die Anlage eine Kondensatleitung, einen Entlüfter (1) und einen Kondensatbehälter (2) aufweist, **dadurch gekennzeichnet**, daß eine erste Förderpumpe (3a), der Entlüfter (1) und eine zweite Förderpumpe (3b) nacheinander zwischen dem Kondensatbehälter (2) und dem Heizkessel angeordnet sind, wobei ein Bypass oder eine Umgehungsleitung (8) zur Wasser-Rückführung in den Kondensatbehälter (2) zwischen dem Entlüfter (1) und der zweiten Förderpumpe (3b) angeordnet ist und wobei der Entlüfter (1) ein Entlüfter vom Film-Typ ist.

## Revendications

1. Système désaérateur pour une chaudière, ledit système possédant une ligne de condensat, un désaérateur (1) et un réservoir de condensat (2), caractérisé en ce qu'une première pompe de transport (3a), le désaérateur (1) et une seconde pompe de transport (3b) sont disposés en série entre le réservoir de condensat (2) et la chaudière, une dérivation (8) servant à renvoyer l'eau au réservoir de condensat (2) étant placée entre le désaérateur (1) et la seconde pompe de transport (3b), et le désaérateur (1) étant un désaérateur du type à film.
